**Europäisches Patentamt**

**European Patent Office**

**Office européen des brevets**

(19)

(11) Numéro de publication: **0 082 069**
**B1**

(12) # FASCICULE DE BREVET EUROPEEN

(45) Date de publication du fascicule du brevet:
**04.06.86**

(21) Numéro de dépôt: **82402246.1**

(22) Date de dépôt: **08.12.82**

(51) Int. Cl.⁴: **B 23 P 19/02,** B 23 Q 1/14,
F 28 G 13/00

(54) **Dispositif de support et de déplacement d'outils pour la fixation d'un faisceau de tubes sur une plaque tubulaire d'un générateur de vapeur.**

(30) Priorité: **11.12.81 FR 8123161**

(43) Date de publication de la demande:
**22.06.83 Bulletin 83/25**

(45) Mention de la délivrance du brevet:
**04.06.86 Bulletin 86/23**

(84) Etats contractants désignés:
**BE CH DE FR GB IT LI SE**

(56) Documents cités:
**DE - A - 2 424 008**
**DE - A - 2 832 445**
**DE - A - 2 848 304**

(73) Titulaire: **Framatome, Tour Fiat 1 place de la Coupole,
F-92400 Courbevoie (FR)**

(72) Inventeur: **Michaud, Jean-Pierre, 3bis rue des Champs
Faucillon, F-92140 Clamart (FR)**
Inventeur: **Morisot, Michel, Aluze,
F-71510 Saint-Leger-sur-Dheune (FR)**
Inventeur: **Werle, Roland, 7 rue du Fondu, Auffargis
F-78610 Le Perray-en-Yvelines (FR)**

(74) Mandataire: **Legendre, Gérard et al, Société
Brevatome 25, rue de Ponthieu, F-75008 Paris (FR)**

## Description

L'invention concerne un dispositif de support et de déplacement d'outils pour la fixation d'un faisceau de tubes sur la plaque tubulaire d'un générateur de vapeur d'un réacteur à eau sous pression.

Les générateurs de vapeur des réacteurs nucléaires à eau sous pression sont constitués par une enveloppe de grande hauteur, de l'ordre de 20 mètres dont la partie inférieure renferme un faisceau de tubes fixés sur une plaque tubulaire à l'intérieur duquel l'eau sous pression venant de la cuve du réacteur circule de bas en haut puis de haut en bas, les tubes étant coudés, avant d'être renvoyée à la cuve du réacteur nucléaire. L'eau alimentaire destinée à produire la vapeur est introduite dans l'enveloppe du générateur de vapeur et vient en contact avec la surface extérieure des tubes du faisceau où elle se vaporise sous l'effet de la chaleur de l'eau sous pression circulant à l'intérieur des tubes du faisceau.

La partie supérieure du générateur de vapeur contient les séparateurs eau–vapeur et communique avec le circuit de traitement et d'utilisation de la vapeur produite.

Les faisceaux tubulaires de ces générateurs de vapeur comportent un très grand nombre de tubes, par exemple de l'ordre de 3000 dans le cas des générateurs de vapeur des réacteurs nucléaires de 900 MW construits actuellement. Ces tubes sont fixés, par soudage puis dudgeonnés, à chacune de leurs extrémités sur une plaque tubulaire de grande épaisseur dont une des faces est en contact avec l'eau primaire dont la distribution dans les tubes est effectuée dans un compartiment d'une chambre en deux parties constituant l'extrémité inférieure du générateur de vapeur.

Lors de la fabrication du générateur de vapeur, la préparation des trous de la plaque tubulaire, avant la mise en place du faisceau ainsi que le dudgeonnage et le dégraissage de ces tubes, sont des opérations extrêmement longues et qui requièrent un très grand soin.

Ces opérations sont réalisées en atelier, sur le générateur de vapeur en cours de montage, maintenu en position horizontale sur des rouleaux permettant de le faire tourner autour de son axe longitudinal disposé horizontalement.

Le nettoyage de chacun des trous de la plaque tubulaire, avant la mise en place du faisceau, doit être réalisé manuellement, le travail des opérateurs chargés de ce nettoyage est extrêmement fastidieux.

De la même façon, le dudgeonnage des tubes à l'intérieur de la plaque tubulaire doit être réalisé par des opérateurs, avec des outils à mains qu'il faut déplacer d'un tube à l'autre sur toute la plaque tubulaire.

Le dudgeonnage doit être suivi d'une opération de relaxation des contraintes du tube dudgeonné au niveau de la zone de transition entre la partie dudgeonnée et la partie non dudgeonnée du tube.

Enfin, il faut dégraisser chacun des tubes après dudgeonnage et détensionnement.

On connaît des outils ou dispositifs permettant de réaliser les différentes opérations de préparation de la plaque et de fixation du faisceau de façon relativement rapide et automatique, cependant le déplacement de ces outils d'un trou à un autre de la plaque tubulaire ou d'un tube à un autre du faisceau nécessite l'intervention d'un opérateur, si bien que l'ensemble des opérations relatives à un générateur de vapeur restent extrêmement longues et que la fabrication des générateurs de vapeur reste une des opérations ralentissant considérablement la fabrication d'un réacteur nucléaire.

Le document DE-A 2 832 445 décrit un outillage permettant de réaliser des usinages sur une plaque tubulaire. Cet outillage se fixe sur une des faces de la plaque et comporte des glissières et des moyens de déplacement de l'outil suivant le plan de la plaque et perpendiculairement à celle-ci.

D'autre part, le document DE-A 2 424 008 décrit un dispositif de détubage d'échangeur de chaleur comportant un chariot pouvant se déplacer perpendiculairement à une plaque à tubes. Un support, monté sur ce chariot et auquel est suspendu l'appareil de détubage proprement dit, se déplace par rapport à ce chariot également perpendiculairement à la plaque à tubes. Ce document a servi de base pour l'élaboration du préambule de la revendication 1.

Le but de l'invention est donc de proposer un dispositif de support et de déplacement d'outils pour la fixation d'un faisceau de tubes sur la plaque tubulaire d'un générateur de vapeur d'un réacteur nucléaire à eau sous pression, le générateur de vapeur en cours de montage en atelier, étant disposé avec son axe horizontal et sa plaque tubulaire verticale, ce dispositif devant permettre d'automatiser les opérations de préparation de la plaque tubulaire et de fixation du faisceau, de raccourcir considérablement le temps nécessaire pour la fabrication du générateur de vapeur et de supprimer les tâches fastidieuses à réaliser manuellement sur la plaque tubulaire ou les tubes du faisceau.

Dans ce but, le dispositif comporte, de manière connue, une première voie de circulation horizontale posée sur le sol de l'atelier au voisinage du poste de montage du générateur, et parallèle à l'axe de ce générateur, et un chariot mobile sur cette voie de circulation entre une position éloignée de la plaque tubulaire et une position voisine de celle-ci. Selon l'invention, il comporte en outre:

– un support reposant fixement sur le chariot par l'intermédiaire de moyens de réglage d'horizontalité,

– une seconde voie de circulation portée par le support, perpendiculaire à la voie de circulation du chariot,

– au moins une structure de support constituée par une embase mobile sur la seconde voie de circulation portant une colonne verticale,

– au moins un porte-outils monté mobile verticalement sur la colonne verticale pour la présentation d'un outil au niveau de chacun des trous de la plaque tubulaire successivement, grâce à des moyens de guidage et de déplacement portés par la colonne verticale et à des moyens de commande de déplacement,

– et des moyens de déplacement du chariot et de la structure de support sur leurs voies de circulation.

Afin de bien faire comprendre l'invention, on va décrire, à titre d'exemple non limitatif, en se référant aux figures jointes en annexe, deux dispositifs suivant l'invention permettant de réaliser les différentes opérations de fixation du faisceau. On décrira également une opération de fixation du faisceau tubulaire sur la plaque d'un générateur de vapeur.

La figure 1 représente dans une vue en coupe par un plan vertical la partie inférieure d'un générateur de vapeur sur laquelle on effectue le nettoyage des trous de la plaque tubulaire.

La figure 2 représente de façon schématique l'appareillage servant au nettoyage automatique des trous du générateur de vapeur.

La figure 3 représente dans une vue en coupe par un plan vertical la partie inférieure du générateur de vapeur pendant l'opération de dudgeonnage et de détensionnement des tubes du faisceau.

La figure 4 représente, dans une vue en coupe à grande échelle, l'extrémité d'un tube engagé dans la plaque tubulaire avant et après l'opération de dudgeonnage.

La figure 5 représente dans une vue identique à celle de la figure 5 l'extrémité d'un tube engagé dans la plaque tubulaire avant et après l'opération de détensionnement.

La figure 6 représente, dans une vue en perspective, un dispositif de support et de déplacement d'un outil permettant de réaliser le nettoyage des trous de la plaque tubulaire et le dégraissage des tubes.

La figure 7 représente une vue en élévation du dispositif et de la plaque tubulaire suivant A de la figure 6.

La figure 8 représente une vue en élévation suivant B de la figure 6.

La figure 9 représente une vue en perspective d'un dispositif de support et de déplacement de l'outil permettant de réaliser le dudgeonnage et le détensionnement des tubes du faisceau d'un générateur de vapeur.

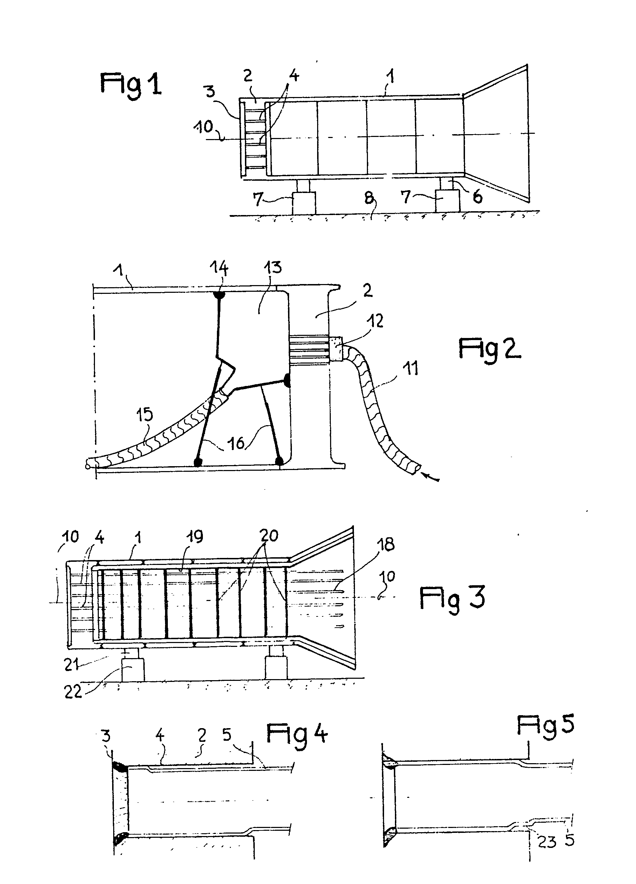

Sur la figure 1, on voit la partie inférieure de l'enveloppe externe 1 d'un générateur de vapeur d'un réacteur nucléaire à eau sous pression.

Cette enveloppe externe est constituée par un ensemble de viroles cylindriques soudées entre elles et une virole conique destinée au raccordement de la partie inférieure à faible diamètre du générateur de vapeur avec la partie supérieure à plus grand diamètre.

A son extrémité inférieure l'enveloppe est reliée à la plaque tubulaire de grande épaisseur 2 destinée à venir en contact par sa face 3 avec l'eau primaire remplissant une chambre limitée par un fond hémisphérique constituant l'extrémité inférieure du générateur de vapeur.

La plaque tubulaire 2 est percée d'un très grand nombre de trous 4 sur toute son épaisseur, c'est-à-dire sur une longueur supérieure à 50 cm.

Après perçage, ces trous doivent être nettoyés soigneusement avant l'introduction des tubes du faisceau.

Pour cela, la partie inférieure du générateur de vapeur est disposée à un poste de nettoyage sur des rouleaux 6 eux-mêmes portés par des supports 7 reposant sur le sol 8 de l'atelier.

Les rouleaux 6 permettent de faire tourner le générateur de vapeur autour de son axe horizontal 10 placé horizontalement.

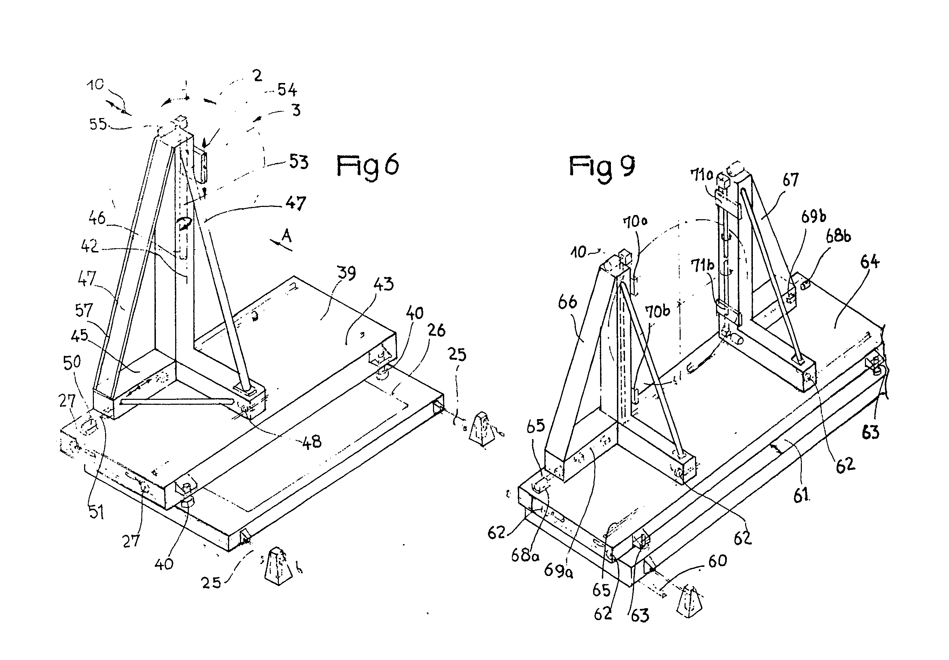

En se référant aux figures 6, 7 et 8, on décrira un dispositif de support et de déplacement suivant l'invention permettant la présentation d'un outil de nettoyage des trous au niveau de chacun des trous de la plaque tubulaire.

Cet outillage de nettoyage automatique des trous est représenté de façon schématique à la figure 2 en position de nettoyage sur la plaque tubulaire 2 du générateur de vapeur en position horizontale à son poste de nettoyage.

Cet outillage comporte une tête de grenaillage 12 alimentée grâce à une canalisation souple 11 en air comprimé contenant en suspension de la grenaille constituée par des micro billes de verre d'un diamètre de 150 à 250 microns.

Une enceinte 13 de récupération de grenaille est maintenue de façon étanche à l'intérieur de l'enveloppe 1 du générateur de vapeur grâce à des joints gonflables 14. Cette enceinte 13 est reliée à une canalisation souple 15 pour la récupération des grenailles. Des pieds supports 16 permettent de maintenir en place l'enceinte de récupération 13.

La tête de grenaillage 12 permet le nettoyage d'un ensemble de trous et le dispositif de support et de déplacement sur lequel est fixé la tête 12 qui sera décrit en se référant aux figures 6 à 8 permet le déplacement de la tête 12 d'une position à une autre sur la plaque tubulaire 2 jusqu'au moment où chacun des trous de la plaque a subi le nettoyage par grenaillage.

Après le grenaillage, les trous sont balayés par un courant d'air sous pression permettant l'élimination éventuelle de particules ou poussières pouvant subsister dans ces trous.

Sur la figure 3, on voit la partie inférieure du générateur dans laquelle a été introduit le faisceau 18, l'enveloppe interne 19 du faisceau et les plaques entretoises de maintien 20.

Les tubes sont simplement engagés dans la plaque tubulaire sur toute la longueur des trous 4 et préalablement soudés à leur extrémité.

Sur la figure 3, la partie inférieure du générateur de vapeur contenant le faisceau a été représentée dans sa position au stand de dudgeonnage et de détensionnement où ce générateur repose sur des rouleaux 21 placés sur de supports 22.

Sur la figure 4 on voit un tube 5 placé à l'intérieur d'un trou 4 de la plaque tubulaire 2 et soudé sur la face 3 de la plaque tubulaire 2 après mise en place du faisceau.

La demi-vue supérieure montre le tube 5 en position dans le trou 4 avant l'opération de dudgeonnage et la partie inférieure de la figure 4 montre le tube après l'opération de dudgeonnage, c'est-à-dire après sertissage et laminage du tube contre la paroi du trou 4.

Pour réaliser cette opération de dudgeonnage, on introduit dans les tubes en place dans les trous de la plaque tubulaire, un outillage comportant à son extrémité un dudgeon dont les galets tournants réalisent le sertissage et le laminage du tube 5 contre la surface interne du trou 4.

Sur la figure 5, on voit dans la partie supérieure de la figure le tube après opération de dudgeonnage tel que représenté sur la partie inférieure de la figure 4 et sur la partie inférieure de la figure 5, le tube 5 après l'opération de détensionnement de la zone de transition 23 de ce tube située entre la partie dudgeonnée et la partie non dudgeonnée du tube au voisinage de la face de la plaque tubulaire 2 située du côté secondaire du générateur.

Cette opération de détensionnement dont l'outillage a été décrit dans le brevet français FR-A-2 416 066, de la Société Framatome, permet, par élimination des contraintes dans la zone de transition, de diminuer la susceptibilité à la corrosion sous tension de la zone des tubes située au voisinage de la face de la plaque tubulaire du côté secondaire du générateur.

L'opération de détensionnement est réalisée par un outillage tel que décrit dans le brevet français FR-A-2 416 066.

Ces opérations de dudgeonnage et de détensionnement sont effectuées par un ensemble d'outillages portés par un dispositif de support et de déplacement tel que celui qui sera décrit en se référant à la figure 9.

Cet ensemble d'outillages portés par le dispositif représenté à la figure 9 permet de réaliser simultanément des opérations de dudgeonnage et de détensionnement sur des trous voisins et de déplacer automatiquement les outillages d'un ensemble de trous à un autre de la plaque tubulaire. De cette façon, le dudgeonnage et le détensionnement du faisceau tubulaire peuvent être réalisés beaucoup plus rapidement que dans le cas d'utilisation d'outillages mis en œuvre manuellement par des opérateurs.

Pour effectuer le dudgeonnage et le détensionnement des tubes, on introduit dans ceux-ci une petite quantité de graisse destinée à servir de lubrifiant au contact entre le dudgeon et le tube.

Après les opérations de dudgeonnage et de détensionnement il est nécessaire d'effectuer le dégraissage des tubes et pour cela on utilise le dispositif de support et de déplacement d'outillages tel que représenté aux figures 6 à 8 pour le déplacement d'une lance d'injection d'eau chaude de façon à réaliser le dégraissage par injection d'eau chaude de chacun des tubes successivement.

Après injection d'eau chaude, on utilise le dispositif de support et de déplacement d'outils pour amener en face de chacun des tubes du faisceau un appareil d'injection de bourres pour le séchage et le nettoyage final du tube dégraissé.

Ces opérations peuvent être réalisées rapidement grâce au dispositif de déplacement et de mise en place des outillages en face de chacune des extrémités des tubes à dégraisser.

Le cycle d'opérations peut être réalisé automatiquement, ce qui accroît la cadence de réalisation des diverses opérations et allège le travail de l'opérateur.

Sur les figures 6, 7 et 8, on voit le dispositif de support et de déplacement des outils de nettoyage par micro billage et insufflation d'air sous pression et de dégraissage et nettoyage final des tubes.

Le dispositif comporte une voie de circulation constituée par deux rails 25 fixés sur le sol de l'atelier, au voisinage du poste de nettoyage de la plaque tubulaire 2 et dirigée suivant la direction de l'axe 10 du corps du générateur de vapeur.

Un chariot 26 se déplace sur les rails 25 grâce à des roues escamotables 27 lorsque ces roues sont mises en position basse grâce à des vérions 28 agissant sur des leviers 29 en prise avec l'axe 30 de la roue.

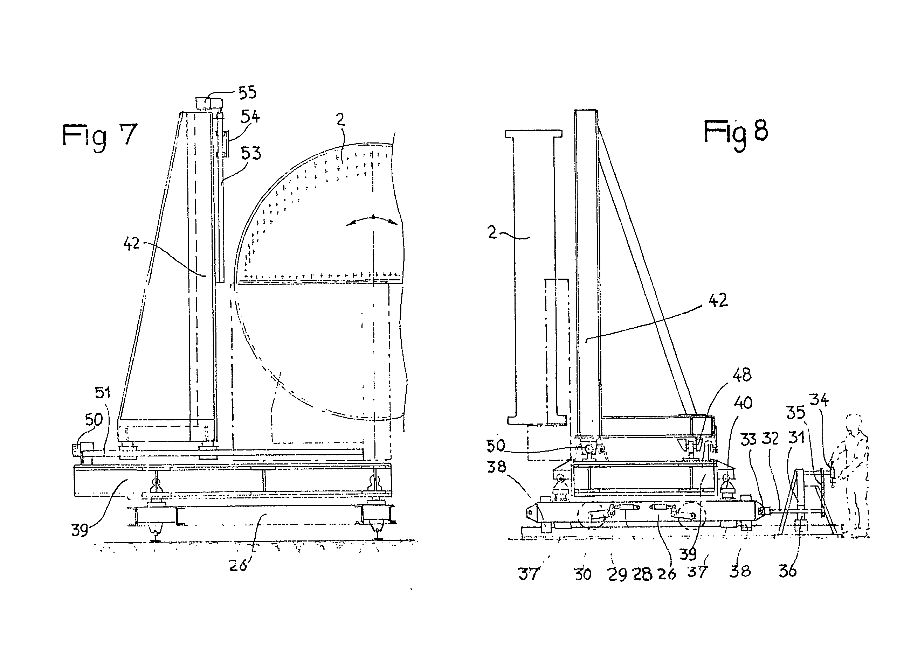

Le chariot mobile sur les rails 25 peut être déplacé par l'opérateur grâce à un dispositif de commande d'avance 31 représenté sur la figure 8.

Ce dispositif de commande d'avance est constitué par une vis d'entraînement 32 engagée dans une pièce de liaison 33 solidaire du chariot et déplaçable en translation par l'opérateur grâce à une manivelle 34, une chaîne d'entraînement 35 et un écrou 36 solidaires du bâti du dispositif de commande 31.

Lorsque le générateur de vapeur est en place sur les supports à rouleaux 6, 7 comme représenté sur la figure 1, la plaque tubulaire 2 est disposée verticalement devant la voie de circulation 25 du chariot 26 comme représenté à la figure 6.

L'opérateur peut alors amener manuellement le chariot en position de travail devant la plaque tubulaire. Les roues du chariot 26 sont alors escamotées grâce aux vérins 28 et aux leviers 29 et le chariot repose sur les patins de support 37. On fixe la position du chariot grâce à des machoires de blocage 38.

Sur le chariot 26 repose un support 39, par l'intermédiaire de supports à rotule 40 réglables en hauteur.

Les supports réglables 40 permettent de régler parfaitement l'horizontalité du support 39 et la verticalité d'une structure de support 42 portée par le support 39.

Sur le support 39 est fixée une voie de circulation constituée par un rail et une glissière dont la direction est perpendiculaire à la direction des rails 25 portés par le sol de l'atelier.

Sur ce rail 43 et la glissière repose l'embase 45 de la structure 42 réalisée sous forme d'un trièdre.

L'embase est constituée par deux éléments à 90° fixés l'un et l'autre à une colonne verticale 46, l'ensemble étant rigidifié par des entretoises 47.

L'embase 45 porte des roues 48 se déplaçant sur le rail 43 et des patins à billes. Un moteur 50 entraîne une vis 51 en rotation qui permet l'entraînement en translation de la structure 42 dont l'embase porte un écrou en prise avec la vis 51.

La colonne verticale 46 porte une vis de direction verticale 53 et un tige verticale de guidage d'un porte-outils 54 ainsi qu'un moteur 55 d'entraînement en rotation de la vis 53. La vis 53 est en prise avec un écrou solidaire du porte-outils 54 si bien que la mise en rotation de la vis 53 par le moteur 55 permet le déplacement du porte-outils 54 dans la direction verticale.

Le déplacement de la structure 42 sur les rails 43 lorsque le chariot 26 et le support 39 sont en place devant la plaque tubulaire du générateur de vapeur permet de disposer le porte-outils en face d'une rangée de trous de la plaque tubulaire, ces trous étant disposés suivant un réseau à mailles carrées.

Le porte-outils 54 supporte le dispositif de micro-billage et de soufflage d'air sous pression représenté à la figure 2 pendant l'opération de nettoyage des trous de la plaque tubulaire.

Ce porte-outils 54 porte la lance d'injection d'eau chaude et le dispositif d'injection de bourres pour le nettoyage final des tubes, lors des opérations de dégraissage après dudgeonnage et détensionnement.

Les déplacements de la structure 42 et du porte-outils 54 sont prévus pour qu'on puisse réaliser le balayage d'un quart de la plaque tubulaire par ces déplacements.

Ces opérations peuvent être effectuées successivement sur les quatre quarts de la plaque tubulaire, par rotation du générateur de vapeur autour de son axe 10 grâce aux rouleaux supports de ce générateur de vapeur.

Sur la figure 9, on voit un dispositif de support et de déplacement d'outillages pour réaliser les opérations de dudgeonnage et de détensionnement des tubes.

Ce dispositif a une structure générale identique à la structure du dispositif de support et de déplacement qui vient d'être décrit et qui est représenté aux figures 6 à 8, à part le fait qu'il comporte deux structures de support analogues supportant elles-mêmes deux porte-outils et que la course des porte-outils est telle qu'elle ne nécessite pas la rotation du générateur de vapeur pendant les opérations de dudgeonnage et de détensionnement.

Ce dispositif comporte des rails de circulation 60 fixés sur le sol de l'atelier au niveau du poste de dudgeonnage et de détensionnement des tubes du générateur de vapeur, parallèles à l'axe 10 de ce générateur de vapeur.

Sur ces rails 60 un chariot 61 peut circuler grâce à des roues escamotables 62 et à un dispositif de déplacement manuel analogue au dispositif 31 représenté sur les figures 6 et 8. Le chariot 61 supporte par l'intermédiaire de butées à rotule réglables 63 un support 64 dont on peut régler l'horizontabilité grâce aux butées réglables 63.

Sur le support 64 est fixée une voie de circulation 65 sur laquelle peuvent se déplacer deux structures de support 66 et 67 pratiquement identiques à la structure 62. Des moteurs 68a et 68b et des vis 69a et 69b en prise avec un écrou porté par les structures de support 66 et 67 respectivement permettent le déplacement de ces structures sur la voie de circulation 65.

Chacune des structures de support 66 et 67 porte sur sa colonne verticale un ensemble de deux vis et de deux tiges de guidage vertical permettant le déplacement de deux porte-outils 70a et 70b et 71a et 71b, respectivement, dans la direction verticale.

Lorsque le dispositif de support et de déplacement est en place au poste de dudgeonnage et de détensionnement du générateur de vapeur, on règle, grâce aux butées supports 63, la verticalité des colonnes verticales des structures 66 et 67 pour réaliser un parallélisme parfait entre ces colonnes et la face verticale de la plaque tubulaire.

Chacun des porte-outils 70 et 71 porte un outil de dudgeonnage et un outil de détensionnement dont l'espacement correspond au pas ou à un multiple du pas des trous de la plaque tubulaire.

De cette façon, on peut réaliser le dudgeonnage des trous de la plaque et simultanément le détensionnement d'un trou voisin sur lequel le dudgeonnage a déjà été réalisé.

Le dispositif représenté à la figure 9 permet donc de réaliser simultanément le dudgeonnage et le détensionnement sur quatre tubes du faisceau.

Le déplacement vertical des porte-outils permet de réaliser cette opération depuis l'extérieur vers l'intérieur du faisceau, le long d'une rangée verticale de trous de la plaque tubulaire.

Les deux structures de support 66 et 67 sont alors déplacées grâce aux moteurs 68a et 68b de façon à faire coïncider le parcours des porte-outils avec une nouvelle rangée de trous de la plaque tubulaire.

L'ensemble des déplacements et des opérations de dudgeonnage et de détensionnement est commandé depuis une cabine où sont rassemblés des moyens de commande des moteurs de déplacement et des outillages fixés sur les porte-outils.

Cette structure plus complexe permettant l'utilisation simultanée d'un grand nombre d'outils a été choisie pour les opérations de dudgeonnage et de détensionnement afin de réaliser ces opérations en un temps suffisamment court pour ne pas ralentir l'ensemble de la fabrication du générateur de vapeur.

Les exemples de réalisation qui ont été décrits ne sont pas limitatifs et l'on peut imaginer d'autres modes de réalisation du dispositif de support et de déplacement d'outils suivant l'invention, telle que caractérisée dans les revendications.

La structure de ces dispositifs peut être différente et les moyens pour réaliser le déplacement des chariots ou supports peuvent également être réalisés différemment par des dispositifs mécaniques, hydrauliques ou pneumatiques.

On peut associer un nombre quelconque de porte-outils à chacune des structures de support et de même associer un nombre quelconque de structures de support pour constituer un dispositif plus complexe permettant de réaliser un plus grand nombre d'opérations simultanément.

Enfin, l'invention s'applique dans tous les cas où l'on désire effectuer la fixation du faisceau tubulaire sur une plaque de grande dimension comportant un très grand nombre de tubes sur des appareils d'échange thermique tels des générateurs de vapeur des centrales nucléaires, de façon rapide et automatique.

**Revendications**

1. Dispositif de support et de déplacement d'outils pour la fixation d'un faisceau de tubes sur la plaque tubulaire (2) d'un générateur de vapeur d'un réacteur nucléaire à eau sous pression, le générateur (1), en cours de montage en atelier, étant disposé avec son axe horizontal et sa plaque tubulaire verticale, du type comportant une première voie de circulation horizontale (25, 60) posée sur le sol de l'atelier au voisinage du poste de montage du générateur de vapeur (1) et parallèle à l'axe (10) de ce générateur, et un chariot (26, 61) mobile sur cette voie de circulation entre une position éloignée de la plaque tubulaire (2) et une position voisine de celle-ci, caractérisé par le fait qu'il comporte en outre:

– un support (39, 64) reposant fixement sur le chariot (26, 61) par l'intermédiaire de moyens de réglage d'horizontalité (40, 63),
– une seconde voie de circulation (43, 65) portée par le support (39, 64), perpendiculaire à la voie de circulation (25, 61) du chariot (26, 61),
– au moins une structure de support (42, 66, 67) constituée par une embase (45) mobile sur la seconde voie de circulation (43, 65) portant une colonne verticale (46),
– au moins un porte-outils (54, 70a, 70b, 71a, 71b), monté mobile verticalement sur la colonne verticale (46) pour la présentation d'un outil au niveau de chacun des trous de la plaque tubulaire (2) successivement grâce à des moyens de guidage et de déplacement (53–55) portés par la colonne verticale (46) et à des moyens (31, 50, 51; 68, 68b) de déplacement du chariot (26, 61) et de la structure de support (42, 66, 67) sur leurs voies de circulation (25 et 43, 60 et 65) respectives.

2. Dispositif de support et de déplacement suivant la revendication 1, caractérisé par le fait qu'il comporte deux structures de support mobiles (66 et 67) sur la seconde voie de circulation (65) et deux porte-outils (70a–70b et 71a–71b) montés mobiles sur chacune des colonnes verticales des deux structures de support (66 et 67).

3. Dispositif de support et de déplacement suivant la revendication 1, caractérisé par le fait que l'amplitude du déplacement de la structure de support (42) et l'amplitude de déplacement du chariot porte-outils (54) permettent un balayage d'un quart de la plaque tubulaire (2) du générateur de vapeur, la rotation de ce générateur de vapeur (1) autour de son axe (10), par quart de tour, à son poste de montage permettant le balayage de toute la plaque tubulaire (2).

4. Dispositif de support et de déplacement suivant la revendication 2, caractérisé par le fait que l'amplitude de déplacement des structures de support (66 et 67) et des porte-outils (70a, 70b, 71a, 71b) montés sur ces structures de support (66 et 67) permettent le balayage par chacun des porte-outils d'un quart de la plaque tubulaire (2), l'ensemble des opérations sur la plaque tubulaire pouvant être effectué sans rotation du générateur de vapeur.

**Patentansprüche**

1. Trage- und Verschiebevorrichtung für Werkzeuge, um ein Rohrbündel auf der Rohrplatte (2) eines Dampfgenerators eines Druckwasserkernreaktors zu befestigen, wobei der Dampfgenerator (1) während der Montage in der Werkstatt mit seiner Achse horizontal und mit seiner Rohrplatte vertikal angeordnet ist, und wobei die Vorrichtung aufweist:

– eine erste horizontal angeordnete Verfahrschiene (25, 60), die auf den Werkstattboden in der Nähe des Montageplatzes des Dampferzeugers (1) parallel zur Achse (10) dieses Dampferzeugers angeordnet ist, und einen auf dieser Schiene verfahrbaren Wagen (26, 61), der zwischen einer von der Rohrplatte (2) entfernten Stelle und einer dicht bei der Rohrplatte gelegenen Stelle verfahrbar ist, gekennzeichnet durch einen Träger (39, 64), der fest auf dem Wagen (26, 61) mittels Einstellgliedern (40, 63) zum Justieren der Horizontalität verankert ist, ein zweites Verfahrgleis (43, 65), das von dem Träger (39, 64) getragen wird und senkrecht zu den Verfahrgleisen (25, 61) des Wagens (26, 61) verläuft, mindestens eine Trägerstruktur (42, 66, 67), bestehend aus einem Sockel (45), der auf dem zweiten Gleis (43, 65) beweglich ist und eine vertikale Säule (46) trägt, mindestens einen Werkzeugträger (54; 70a, 70b, 71a, 71b), der vertikal beweglich auf der vertikalen Säule (46) befestigt ist, um auf der Höhe eines jeden Lochs der Rohrplatte (2) mittels Bewegungs- und Führungsgliedern (53 bis 55) sukzessive ein Werkzeug bereitzustellen, wobei die Führungs- und Bewegungsglieder von der vertikalen Säule (46) getragen werden, und mittels Antrieben (31, 52, 51; 68, 68b) des Wagens (26, 61) und der Trägerstruktur (42, 66, 67) auf ihren jeweiligen Gleisen (25 und 43, 60 und 65).

2. Vorrichtung nach Anspruch 1, gekennzeichnet durch zwei bewegliche Trägerstrukturen (66 und 67) auf der zweiten Schiene (65) und zwei Werkzeugträger (70a bis 70b; 71a bis 71b), die be-

weglich auf jeder der vertikalen Säulen der beiden Trägerstrukturen (66 und 67) angeordnet sind.

3. Vorrichtung nach Anspruch 1, dadurch gekennzeichnet, dass der maximale Bewegungshub der Trägerstruktur (42) und der maximale Bewegungshub des Werkzeugträgerwagens (54) ein Überstreichen eines Viertels der Rohrplatte (2) des Dampferzeugers ermöglichen, wobei die Drehung des Dampferzeugers (1) um seine Achse (10) um jeweils eine Vierteldrehung an seinem Montageplatz das Überstreichen der gesamten Rohrplatte (2) ermöglicht.

4. Vorrichtung nach Anspruch 2, dadurch gekennzeichnet, dass der maximale Bewegungshub der Trägerstrukturen (66 und 67) und der Werkzeugträger (70a, 70b, 71a, 71b), die auf diesen Trägerstrukturen (66 und 67) befestigt sind, das Überstreichen eines Viertels der Rohrplatte (2) durch jeden Werkzeugträger erlauben, wobei die Gesamtheit der auf der Rohrplatte durchzuführenden Arbeiten ausgeführt werden können, ohne den Dampferzeuger zu drehen.

**Claims**

1. Device for supporting and moving tools for fixing a tube bundle to the tube plate (2) of a steam generator of a pressurized water nuclear reactor, the generator (1), which is being assembled in a workshop, being arranged with its axis horizontal and its tube plate vertical, of the type which comprises a first horizontal travel track (25, 60) laid on the workshop floor in the vicinity of the assembly site of the steam generator (1) and parallel to the axis (10) of this generator, and a trolley (26, 61) which can move on this travel track between a position away from the tube plate (2) and a position close to the latter, which device is characterized in that it additionally comprises:

a support (39, 64) which rests firmly on the trolley (26, 61) through the intermediacy of means for adjusting horizontality (40, 63) a second travel track (43, 65) carried by the support (39, 64) (39) (sic), perpendicular to the travel track (25, 61) (sic) of the trolley (26, 61), at least one support structure (42, 66, 67) which consists of a base (45) which can move on the second travel track (43, 65) and carries a vertical column (46), at least one tool-carrier (54, 70a, 70b, 71a, 71b) mounted so that it can move vertically on the vertical column (46) for presenting a tool in the region of each of the holes in the tube plate (2) in succession, by virtue of guiding and travelling means (53–55) carried by the vertical column (46) and by virtue of means (31, 50, 51; 68, 68b) (illegible) for moving the trolley (26, 61) and the support structure (42, 66, 67) on their corresponding travel tracks (25 and 43, 60 and 65).

2. Device for supporting and moving according to Claim 1, characterized in that it comprises two support structures (66 and 67) which can move on the second travel track (65) and two tool-carriers (70a–70b and 71a–71b) mounted so that they can move on each of the vertical columns of the two support structures (66 and 67).

3. Device for supporting and moving according to Claim 1, characterised in that the range of movement of the support structure (42) and the range of movement of the tool-carrier trolley (54) enable a quarter of the tube plate (2) of the steam generator to be scanned, while the rotation of this steam generator (1) by a quarter of a turn around its axis (10), at its assembly site, enables the entire tube plate (2) to be scanned.

4. Device for supporting and moving according to Claim 2, characterized in that the range of movement of the support structures (66 and 67) and of the tool-carriers (70a, 70b, 71a, 71b) which are mounted on these support structures (66 and 67) enable a quarter of the tube plate (2) to be scanned by each of the tool-carriers, all the operations on the tube plate being capable of being carried out without rotation fo the steam generator.

Fig 1

Fig 2

Fig 3

Fig 4

Fig 5

Fig 6

Fig 9

Fig 8

Fig 7